# EUROPÄISCHE PATENTSCHRIFT

(11) **EP 2 101 236 B1**
(45) Veröffentlichungstag und Bekanntmachung des Hinweises auf die Patenterteilung: **04.08.2010**
(21) Anmeldenummer: 08166106.8
(22) Anmeldetag: 08.10.2008
(51) Int. Cl.: G05B 23/02

(54) **Verfahren und Vorrichtung zur Visualisierung von Anlageschemata**
Method and devices for visualising device schematics
Procédé et dispositif destinés à la visualisation de schémas d'installation

(30) Priorität: 13.03.2008 DE 102008000659
(43) Veröffentlichungstag der Anmeldung: 16.09.2009
(73) Patentinhaber: Honeywell Technologies Sarl, 1110 Morges (CH)
(72) Erfinder: Günter, Thomas, 72175, Dornhan (DE); Venezia, Claudio, 71101, Schönaich (DE)
(74) Vertreter: TBK-Patent

(56) Entgegenhaltungen:
- EP-A- 0 482 523

## Beschreibung

Die Erfindung bezieht sich auf ein Verfahren und eine Vorrichtung zur Visualisierung beliebiger Anlagenschemata mit Hilfe einzelner Anlagensegmente, die jeweils zu einem gesamten Anlagenschema angepasst werden. Dem Anlagenschema liegt eine zu visualisierende Anlage zu Grunde, wie beispielsweise eine Heizungs-, Fernwärme-, Kälte-, Lüftungs- und/oder Klimaanlage.

### Stand der Technik:

Im Stand der Technik ist hierzu nicht bekannt, ein komplettes Anlagenschema für derartig beliebige Anlagenschemata aus Einzelsegmenten aufzubauen. Dabei visualisieren die einzelnen Segmente jeweils einen bestimmten Teil des Anlagenschemas. Damit die einzelnen Anlagensegment-Darstellungen zu einem kompletten Anlagenschema zusammenwirken können, müssen sie entsprechend dargestellt und gezeichnet werden. Dies geschieht gemäß bekannten Lösungen auf manuelle Weise. Das heißt das komplette Anlagenschema muss situationsgemäß von einer qualifizierten Person gezeichnet werden. Insbesondere bei sich ständig durch den Klimaschutz ändernden Anlagenerweiterungen muss das gesamte Anlagenschema angepasst und in einigen Fällen sogar komplett neu gezeichnet werden. Speziell dazu muss das Anlagenschema entsprechend der Anlagenregelung angepasst sein. Das heißt, bei einer Änderung und Konfiguration des Regelungskonzepts der Anlage muss das Anlagenschema entsprechend dargestellt werden und sich flexibel für weitere mögliche Änderungen des Regelungskonzeptes anpassen. Insbesondere dafür ergeben sich große Gefahren von Visualisierungsfehlern und auch große und damit zeitaufwendige Visualisierungsaufwände.

EP 482 523 beschreibt ein Verfahren zur Visualisierung von Anlagen.

Es ist folglich ein Problem, dass ein Anlagenschema mit mehreren Verbrauchern und Wärmeerzeugern oftmals eine Vielzahl von schwer nachvollziehbaren Verknüpfungen und Symbolen darstellt, welche oftmals nur von einem Fachmann übersetzt werden können.

Ein besonderes Problem in diesem Zusammenhang ergibt sich auch in diesem Fall, dass ein oder mehrere Einzelsegmente innerhalb eines gesamten Anlagenschema entfernt, modifiziert und/oder hinzugefügt werden. Dabei muss gegebenenfalls die gesamte Darstellung des Anlagenschemas vollständig manuell überarbeitet und entsprechend angepasst werden, was wiederum aufwendig und fehleranfällig ist.

Auch ergibt sich ein weiteres Problem bei bekannten Visualisierungslösungen daraus, dass die Anlagensegmente von dem Designwerkzeug (z.B. einem Zeichen-Editor) abhängig sind, mittels dessen sie gezeichnet und angepasst werden und von daher weder von ihrer Umgebung noch untereinander unabhängig sind.

Es ist folglich ein Nachteil des Standes der Technik, dass die Visualisierung beliebiger Anlagenschemata bei sich ständig durch den Klimaschutz ändernden Anlagenerweiterungen verwaltungsmäßig schwierig und vor allem zeitlich aufwändig, fehleranfällig, sowie unkomfortabel ist.

Dementsprechend liegt der Erfindung die Aufgabe zu Grunde, ein verbessertes Verfahren, eine Vorrichtung und ein Computerprogrammprodukt zur Visualisierung von Anlagenschemata zu schaffen. Dies kann mit Hilfe einzelner Anlagensegmente erfolgen, die jeweils zu einem gesamten Anlagenschema angepasst werden.

Diese Aufgabe wird durch das Verfahren gemäß Anspruch 1, die Vorrichtung gemäß Anspruch 10 und das Computerprogrammprodukt gemäß Anspruch 19 gelöst. Weiterentwicklungen liegen wie in den jeweiligen abhängigen Ansprüchen definier vor.

Die Erfindung stellt eine visualisierungstechnische Lösung der vorgenannten Aufgabe und Probleme dar. Sie ermöglicht, abhängig von Konfigurationen des Regelungskonzepts der Anlage, verschiedene Darstellungen von Einzelkomponenten einer Anlage eines kompletten Anlagenschemas automatisch zu erzeugen.

Es ist ein Vorteil der Erfindung, dass die einzelnen Darstellungen der Anlagensegmente unabhängig voneinander und von dem verwendeten Zeichenwerkzeug gezeichnet werden können. Auch können neue Anlagensegmente ohne Änderung an die Visualisierungsebene angeknüpft werden.

Es ist dadurch ein weiterer Vorteil der Erfindung, dass die Länge der Grafik-Ebene als unendlich lang betrachtet werden kann, da zahlreiche Segmentgrafiken hintereinander aufgelistet werden können.

Es ist ein weiterer Vorteil der Erfindung, dass sich die einzelnen Anlagensegmentdarstellungen automatisch miteinander zu einem gesamten Anlagenschema verbinden können. Dadurch wird der Zeichenaufwand des Schemas bei gleichzeitigem Ausschluss wesentlicher Zeichenfehler (durch Verringerung manueller Zeichenaufwands) erheblich verringert.

Es ist ein weitere Vorteil der Erfindung, dass die Darstellung des Anlagenschemas leicht erkennbar (Führungssysteme überschneiden sich selten und sind durchgängig), mit verschiedenen Führungssystemen gut strukturiert (zum Beispiel sind BWW- und Pufferspeicher in zwei verschiedenen Rohrleitungssystemen verbunden) und fortlaufend verständlich ist (praktische-Einbindung des entsprechenden Anlagenteils in das passende Führungssystem).

Damit verbunden sind auch wirtschaftliche Vorteile, wie etwa eine schnelle Markteinführung neuer Segmentdarstellungen und Anlagenschemata, sowie erleichterte Anpassung an landestypische Anforderungen.

Es ist ein weiterer Vorteil der Erfindung, dass sich die Visualisierung der einzelnen Anlagensegmente und der Anlagenschemata der Anlagenregelung anpasst, selbst bei einer neuen Konfiguration der Anlagenregelung.

Es ist ein zusätzlicher Vorteil der Erfindung, dass durch Ausschluss von Fehlerquellen und durch automatisches Verbinden der einzelnen Anlagensegmentsdarstellungen eine bessere Qualität der Visualisierung des Anlagenschemas erreicht wird.

Dementsprechend stellt die Erfindung eine im Vergleich zum Stand der Technik erleichterte und verbesserte Visualisierung eines zu Grunde liegenden Anlagenschemas dar.

### Kurzbeschreibung der Zeichnungen

Es zeigen:
Figuren 1A, 1B, 1C und 1D ein Ausführungsbeispiel eines Verfahrens gemäß der Erfindung,
Figuren 2A und 2B Beispielplots von Anlagenschemata mit einer bzw. zwei Systemebene(n), die durch das Verfahren bzw. die Vorrichtung gemäß der Erfindung erstellt sind, und
Figuren 3A und 3B Beispielpots von Anlagenschemata mit vier bzw. zwei Systemebenen, die durch das Verfahren bzw. die Vorrichtung gemäß der Erfindung erstellt sind.

### Ausführungsbeispiel

Nachstehend wird unter Bezugnahme auf die Zeichnungen ein Ausführungsbeispiel der Erfindung beschrieben, mittels dessen sich Aufgabe, Merkmale und Vorteile der Erfindung besser verstehen lassen.

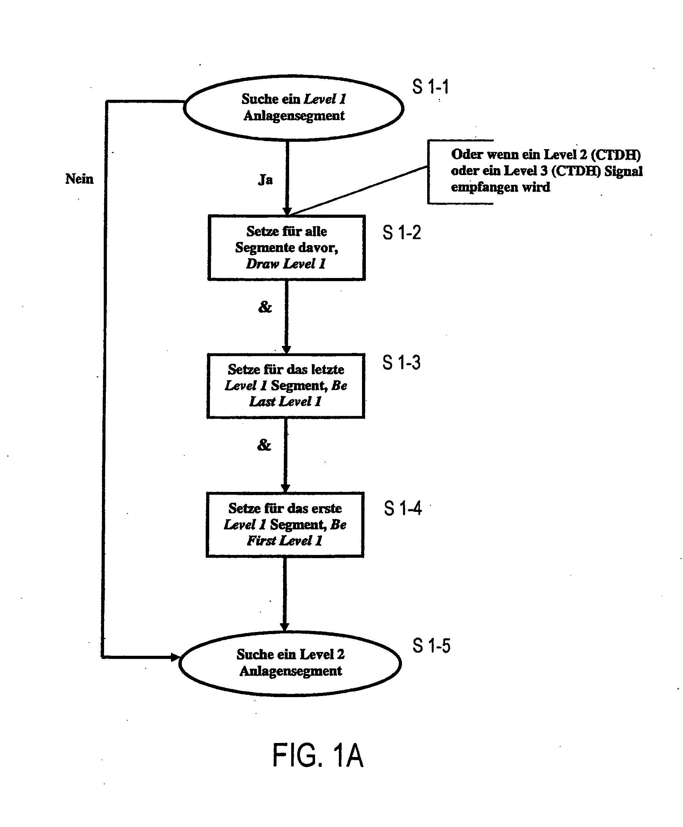

Figuren 1A bis 1D zeigen ein Ausführungsbeispiel des Verfahrens bzw. der Vorrichtung gemäß der Erfindung.
Fig. 1A zeigt ein Ablaufdiagramm der Verarbeitung eines Anlagensegments, das mit der ersten Systemebene (bzw. Abstraktionsebene) assoziiert ist.

In Schritt S1-1 wird bestimmt, ob ein momentan ausgewähltes Anlagensegment mit der ersten Systemebene (z.B. Primärsystem eines Fernwärmeheizsystems) assoziiert ist. Wenn dem nicht so ist, geht die Verarbeitung zu Schritt S1-5 über, um zu prüfen, ob das momentan ausgewählte Anlagensegment mit der zweiten Systemebene (z.B. Sekundärsystem eines Wärmeerzeugers, wie ein Kessel oder eine Wärmepumpe) assoziiert ist. Ist das momentan ausgewählte Anlagensegment mit der ersten Systemebene assoziiert, dann geht die Verarbeitung zu Schritt S1-2 über.

In Schritt S1-2 wird für alle zuvor bereits angezeigten Anlagensegmente die assoziierte Systemebene auf die erste Systemebene eingestellt (bzw. gesetzt). Das heißt z.B., dass ein Hinzufügen eines Anlagenelements des Primärkreises dazu führen kann, dass alle bereits angezeigten Anlagensegmente ebenfalls zum Primärkreis gehören.

In Schritt S1-3 wird das letzte bereits zuvor angezeigte Anlagensegment, das der ersten Systemebene angehört, als das letzte Anlagensegment der ersten Systemebene gesetzt. Dies kann beispielsweise durch einen Zeiger "Be Last Level 1" durchgeführt werden.

In Schritt S1-4 wird das erste bereits zuvor angezeigte Anlagensegment, das der ersten Systemebene angehört, als das erste Anlagensegmente der ersten Systemebene gesetzt. Dies kann beispielsweise durch einen Zeiger "Be First Level 1" durchgeführt werden.

Alternativ können Schritte S1-4 alternativ nicht von der Bestimmung der ersten Systemebene in Schritt S1-1, sondern von einem Empfang eines Signals der zweiten oder dritten Systemebene abhängen. Das Signal kann ein CTDH- (?) -Signal sein.

Danach wird in Schritt S1-5 geprüft, ob das momentan ausgewählte Anlagensegment mit der zweiten Systemebene assoziiert ist.

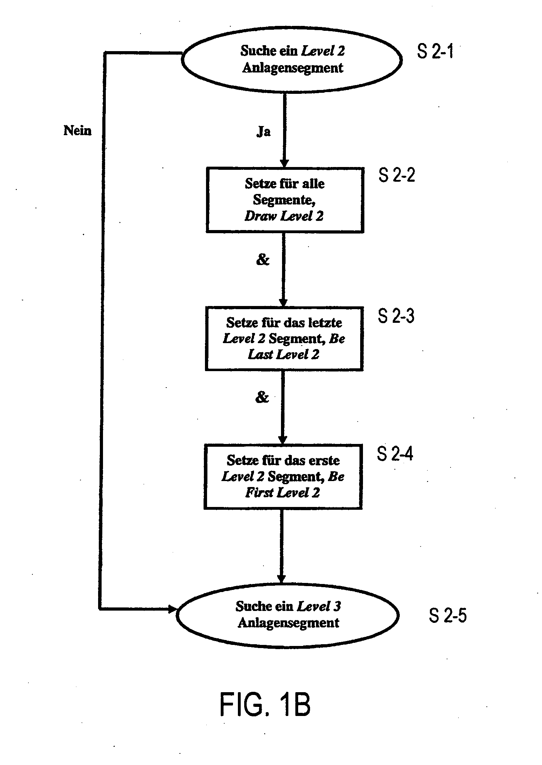

Fig. 1B zeigt ein Ablaufdiagramm der Verarbeitung eines Anlagensegments, das mit der zweiten Systemebene (bzw. Abstraktionsebene) assoziiert ist.

In Schritt S2-1 (identisch mit Schritt S1-5 gemäß Fig. 1A) wird bestimmt, ob ein momentan ausgewähltes Anlagensegment mit der zweiten Systemebene (z.B. Sekundärsystem eines Wärmeerzeugers, wie ein Kessel oder eine Wärmepumpe) assoziiert ist. Wenn dem nicht so ist, geht die Verarbeitung zu Schritt S2-5 über, um zu prüfen, ob das momentan ausgewählte Anlagensegment mit der dritten Systemebene (z.B. erstes Rohrleitungssystem, das von einem Brauchwasserspeicher zu einem Solarkollektor führt) assoziiert ist. Ist das momentan ausgewählte Anlagensegment mit der zweiten Systemebene assoziiert, dann geht die Verarbeitung zu Schritt S2-2 über.

In Schritt S2-2 wird für alle zuvor bereits angezeigten und für alle nachfolgend noch anzuzeigenden Anlagensegmente die assoziierte Systemebene auf die zweite Systemebene (vor)eingestellt (bzw. gesetzt). Das heißt z.B., dass ein Hinzufügen eines Anlagenelements des Sekundärkreises dazu führen kann, dass alle bereits angezeigten Anlagensegmente ebenfalls zum Sekundärkreis gehören. Außerdem kann für alle noch anzuzeigenden Anlagesegmente der Sekundärkreis als Systemebene voreingestellt werden.

In Schritt S2-3 wird das letzte bereits zuvor angezeigte Anlagensegment, das der zweiten Systemebene angehört, als das letzte Anlagensegment der zweiten Systemebene gesetzt. Dies kann beispielsweise durch einen Zeiger "Be Last Level 2" durchgeführt werden.

In Schritt S2-4 wird das erste bereits zuvor angezeigte Anlagensegment, das der zweiten Systemebene angehört, als das erste Anlagensegment der zweiten Systemebene gesetzt. Dies kann beispielsweise durch einen Zeiger "Be First Level 2" durchgeführt werden.

Danach wird in Schritt S2-5 geprüft, ob das momentan ausgewählte Anlagensegment mit der dritten Systemebene assoziiert ist.

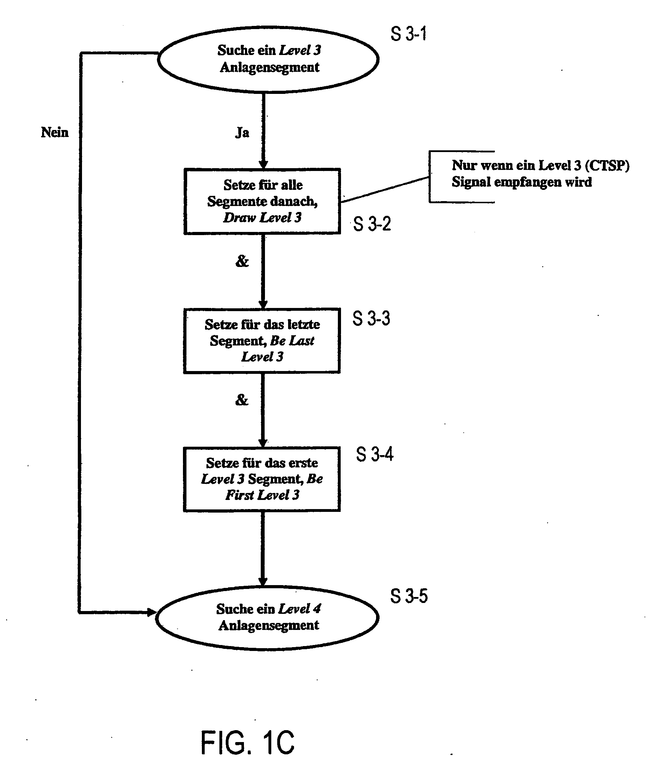

Fig. 1C zeigt ein Ablaufdiagramm der Verarbeitung eines Anlagensegments, das mit der dritten Systemebene (bzw. Abstraktionsebene) assoziiert ist.

In Schritt S3-1 (identisch mit Schritt S2-5 gemäß Fig. 1B) wird bestimmt, ob ein momentan ausgewähltes Anlagensegment mit der dritten Systemebene (z.B. das erste Rohrleitungssystem, das von einem Brauchwasserspeicher zu einem Solarkollektor führt) assoziiert ist. Wenn dem nicht so ist, geht die Verarbeitung zu Schritt S3-5 über, um zu prüfen, ob das momentan ausgewählte Anlagensegment mit der vierten Systemebene (z.B. zweites Rohrleitungssystem, das von einem Pufferspeicher zu dem Solarkollektor führt) assoziiert ist. Ist das momentan ausgewählte Anlagensegment mit der dritten Systemebene assoziiert, dann geht die Verarbeitung zu Schritt S3-2 über.

In Schritt S3-2 wird für alle nachfolgend noch anzuzeigenden Anlagensegmente die assoziierte Systemebene auf die dritte Systemebene voreingestellt (bzw. gesetzt). Das heißt z.B., dass ein Hinzufügen eines Anlagenelements des ersten Rohrleitungssystems dazu führen kann, dass für alle noch anzuzeigenden Anlagesegmente das erste Rohrleitungssystem als Systemebene voreingestellt wird.

In Schritt S3-3 wird das letzte bereits zuvor angezeigte Anlagensegment (unabhängig von seiner Systemebene) als das letzte Anlagensegment der dritten Systemebene gesetzt. Dies kann beispielsweise durch einen Zeiger "Be Last Level 3" durchgeführt werden.

In Schritt S3-4 wird das erste bereits zuvor angezeigte Anlagensegment, das der dritten Systemebene angehört, als das erste Anlagensegment der dritten Systemebene gesetzt. Dies kann beispielsweise durch einen Zeiger "Be First Level 3" durchgeführt werden.

Schritte S3-1 bis S3-4 hängen womöglich nicht lediglich von der Bestimmung der dritten Systemebene in Schritt S3-1 ab, sondern können zusätzlich von einem Empfang eines Signals der dritten Systemebene abhängen. Das Signal kann ein CTSP-(?) -Signal sein.

Danach wird in Schritt S3-5 geprüft, ob das momentan ausgewählte Anlagensegment mit der vierten Systemebene assoziiert ist.

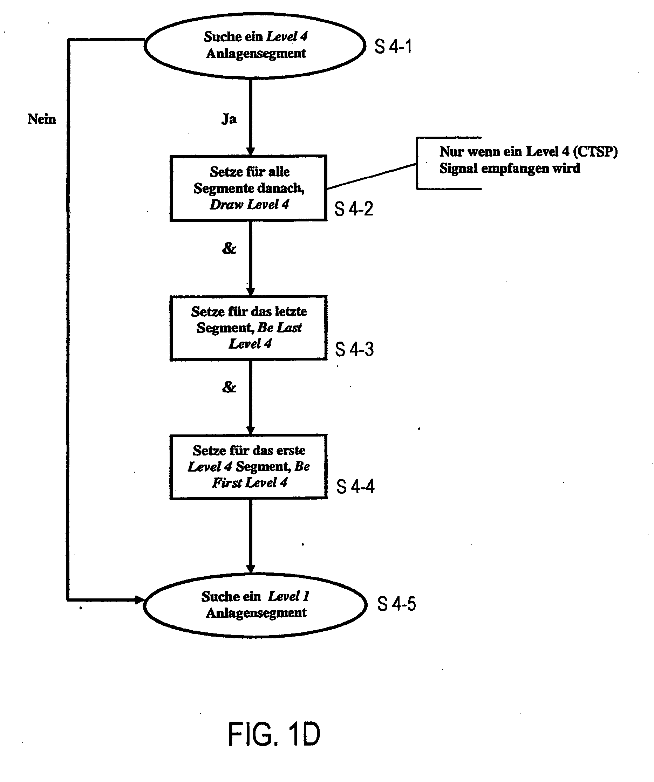

Fig. 1D zeigt ein Ablaufdiagramm der Verarbeitung eines Anlagensegments, das mit der vierten Systemebene (bzw. Abstraktionsebene) assoziiert ist.

In Schritt S4-1 (identisch mit Schritt S3-5 gemäß Fig. 1C) wird bestimmt, ob ein momentan ausgewähltes Anlagensegment mit der vierten Systemebene (z.B. das zweite Rohrleitungssystem, das von einem Pufferspeicher zu dem Solarkollektor führt) assoziiert ist. Wenn dem nicht so ist, geht die Verarbeitung zu Schritt S4-5 über, um zu prüfen, ob das momentan ausgewählte Anlagensegment wieder mit der ersten Systemebene (z.B. Primärkreis eines Fernwärmeheizsystems) assoziiert ist. Ist das momentan ausgewählte Anlagensegment mit der vierten Systemebene assoziiert, dann geht die Verarbeitung zu Schritt S4-2 über.

In Schritt S4-2 wird für alle nachfolgend noch anzuzeigenden Anlagensegmente die assoziierte Systemebene auf die vierte Systemebene voreingestellt (bzw. gesetzt). Das heißt z.B., dass ein Hinzufügen eines Anlagenelements des zweiten Rohrleitungssystems dazu führen kann, dass für alle noch anzuzeigenden Anlagesegmente das zweite Rohrleitungssystem als Systemebene voreingestellt wird.

In Schritt S4-3 wird das letzte bereits zuvor angezeigte Anlagensegment (unabhängig von seiner Systemebene) als das letzte Anlagensegment der vierten Systemebene gesetzt. Dies kann beispielsweise durch einen Zeiger "Be Last Level 4" durchgeführt werden.

In Schritt S4-4 wird das erste bereits zuvor angezeigte Anlagensegment, das der vierten Systemebene angehört, als das erste Anlagensegment der vierten Systemebene gesetzt. Dies kann beispielsweise durch einen Zeiger "Be First Level 4" durchgeführt werden.

Schritte S4-1 bis S4-4 hängen womöglich nicht lediglich von der Bestimmung der vierten Systemebene in Schritt S4-1 ab, sondern können zusätzlich von einem Empfang eines Signals der vierten Systemebene abhängen. Das Signal kann ein CTSP-Signal sein.

Danach wird in Schritt S4-5 geprüft, ob das momentan ausgewählte Anlagensegment wieder mit der ersten Systemebene assoziiert ist.

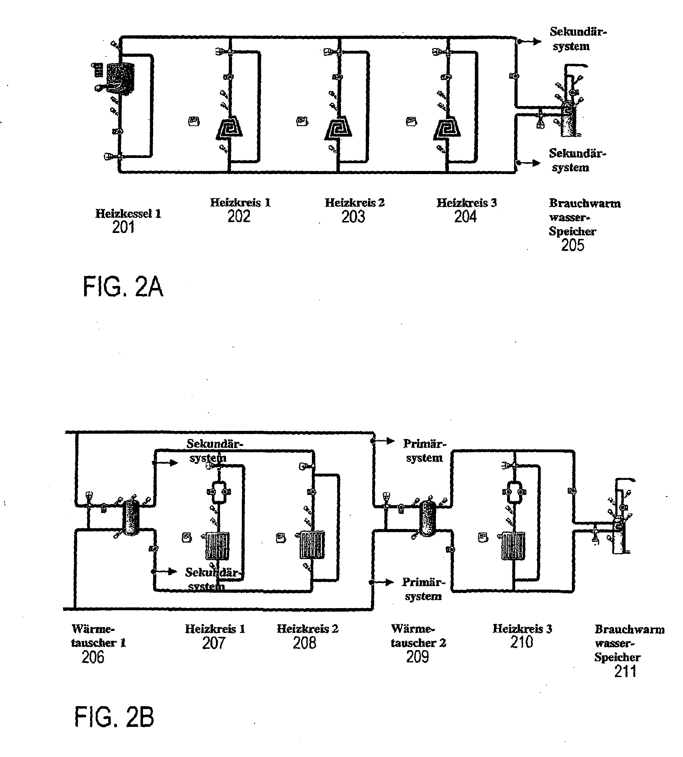

Figuren 2A und 2B zeigen Beispielplots von Anlagenschemata mit einer bzw. zwei Systemebene(n), die durch das Verfahren bzw. die Vorrichtung gemäß der Erfindung erstellt sind.
Fig. 2A zeigt ein Anlagenschema eines .Systems mit einem Heizkessel 201, 3 Heizkreisen 202, 203, 204 und einem Brauchwarmwasser- (BWW) -speicher 205. Wie aus Fig. 2A ersichtlich, sind alle Anlagensegmente 201 bis 205 mit der zweiten Systemebene (d.h. dem Sekundärsystem) assoziiert.
Wie aus Fig. 1B ersichtlich, ist der Heizkessel 201 das erste Anlagensegment der zweiten Systemebene ("Be First Level 2") und ist der BWW-Speicher 205 das letzte Anlagensegment der zweiten Systemebene ("Be Last Level 2").
Entsprechend zeigt Fig. 2A den einfachsten Fall eines Anlagenschemas, das nur eine Systemebene ohne weitere überlagerte bzw. unterlagerte Systemebenen enthält.

Fig. 2B zeigt ein Fernwärmeheizsystem mit 2 Wärmetauschern 206, 209, die mit der ersten Systemebene assoziiert sind, sowie Heizkreisen 207, 208, 210 und einem BWW-Speicher 211, die mit der zweiten Systemebene assoziiert sind. Mit anderen Worten ist ein Fernwärmeheizsystem mit 2 Wärmetauschern 206, 209 in 2 getrennten Verbrauchersystemen 207, 208 und einer BWW-Aufbereitung gezeigt.

Wie aus Figuren 1A und 1B ersichtlich, bildet nun der Wärmetauscher 206 das erste Anlagensegment der ersten Systemebene ("Be First Level 1") und bildet Wärmetauscher 209 das letzte Anlagensegment ("Be Last Level 1") der ersten Systemebene. Ferner existieren 2 Verbrauchersysteme, wobei der Heizkreis 207 das erste Anlagensegment der zweiten Systemebene ("Be First Level 2") und Heizkreis 208 das letzte Anlagensegment der zweiten Systemebene ("Be Last Level 2") des ersten Verbrauchersystems ist. Entsprechend sind Heizkreis 210 bzw. BWW-Speicher 211 das erste bzw. letzte Anlagensegment der zweiten Systemebene des zweiten Verbrauchersystems.

Demgemäß zeigt Fig. 2B einen Fall mit zwei Systemebenen, in dem das Fernwärmeheizsystem den sekundären Verbrauchersystemen überlagert ist.

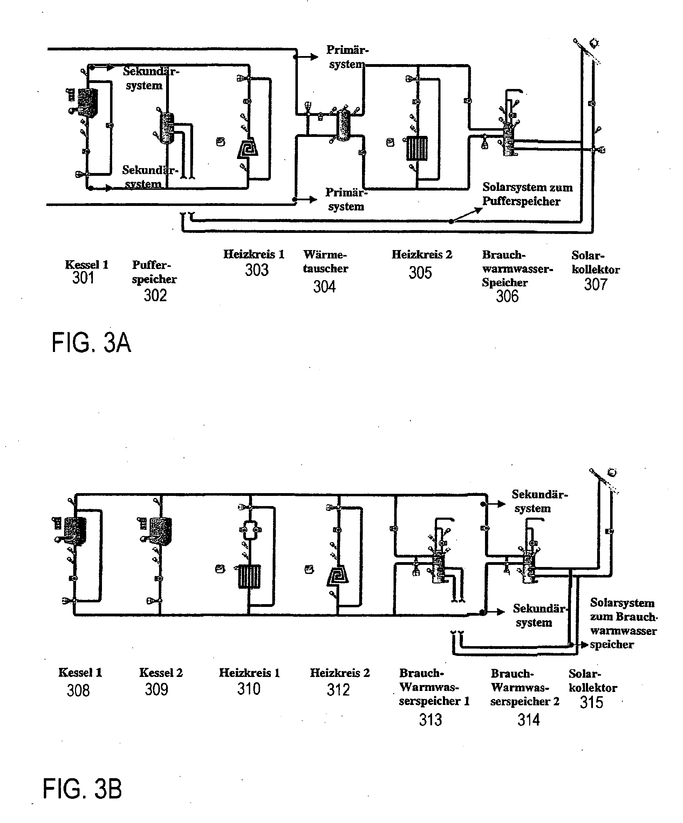

Figuren 3A und 3B zeigen Beispielplots von Anlagenschemata mit vier bzw. zwei Systemebenen, die durch das Verfahren bzw. die Vorrichtung gemäß der Erfindung erstellt sind.

Fig. 3A zeigt Fernwärmesystem mit einem Kessel 301 (zweite Systemebene), einem Pufferspeicher 302 (zweite und vierte Systemebene), einem Heizkreis 303 (zweite Systemebene), einem Wärmetauscher 304 (erste Systemebene), einem Heizkreis 305 (zweite Systemebene), einem BWW-Speicher 306 (zweite und dritte Systemebene) und einem Solarkollektor 307 (dritte und vierte Systemebene).

Ohne auf alle Einzelheiten aus Fig. 3A einzugehen, ist aus Figuren 1A bis 1D ersichtlich, das einzelne Anlagensegmente auch mit mehr als einer Systemebene assoziiert sein können. Ferner können einzelne Anlagensegmente auch für mehr als eine Systemebene erste bzw. letzte Segmente sein. Beispielsweise gehört der Pufferspeicher 302 der zweiten Systemebene (als Segment des ersten Sekundärsystems 301, 302, 303) und der vierten Systemebene (als erstes Segment ("Be First Level 4") der solargestützten Pufferspeicherspeisung 302, 307) an. Der Solarkollektor 307 ist beispielsweise das letzte Segment ("Be Last Level 3") der dritten Systemebene (als Abschlusssegment des Systems 306, 307 zur solargestützten BWW-Aufbereitung) und auch das letzte Segment ("Be Last Level 4") der vierten Systemebene (als letztes Segment der solargestützten Pufferspeicherspeisung 302, 307). Schließlich ist der BWW-Speicher 306 gleichzeitig erstes Segment der dritten Systemebene (des Systems 306, 307 zur solargestützten BWW-Aufbereitung) und letztes Segment der zweiten Systemebene (des Sekundärsystems 305, 306).

Somit zeigt Fig. 3A einen komplexen Fall eines Anlagenschemas, in dem ein primäres Fernwärmeheizsystem 304 zwei sekundären Verbrauchersystemen überlagert ist, wobei dem ersten Verbrauchersystem 301, 302, 303 eine solargestützte Pufferspeicherspeisung 302, 307 und dem zweiten Verbrauchersystem 305, 306 eine solargestützte BWW-Aufbereitung 306, 307 unterlagert ist.

Fig. 3B zeigt schließlich ein System mit zwei Systemebenen, das zwei Kessel 308, 309 und 2 Heizkreise 310, 312 (zweite Systemebene) aufweist. Ferner sind zwei BWW-Speicher 313, 314 (zweite und dritte Systemebene) und ein Solarkollektor 315 (dritte Systemebene) gezeigt. Das heißt, dem Sekundärkreis 308 bis 314 der zweiten Systemebene sind zwei solargestützte BWW-Aufbereitungen 313, 315 und 314, 315 der dritten Systemebene unterlagert.

Die Zuordnung von ersten und letzten Anlagesegmenten in jeweiligen Systemebenen wurde bereits hinreichend diskutiert. Fig. 3B zeigt, dass auch zwei gleichrangige Systeme (313, 315 und 314, 315), die sich ein Segment (hier: Solarkollektor 315) teilen, nebeneinander existieren können, ohne dass das Anlagenschema fehlerhaft oder unübersichtlich wird.

Mit anderen Worten wird zum Zwecke der Erfindung zwischen einem primären und sekundären Rohrleitungssystem unterschieden. Das Primärsystem stellt das Fernwärmeheizsystem dar. Für alle anderen Heizsysteme, sei es mit einer Wärmepumpe oder einem Kessel als Wärmeerzeuger, wird immer der Sekundärkreis verwendet. Zudem kommen zwei weitere Systeme hinzu, zum einen das Rohrleitungssystem welches vom Brauchwasserspeicher zum Solarkollektor führt und das Rohrleitungssystem welches vom Pufferspeicher zum Solarkollektor.

Diese strikte Abgrenzung von 4 Systemen oder Levels ermöglicht einen übersichtlichen Systemaufbau selbst für eine große Anzahl an Verbrauchern und Wärmeerzeugern im System. In den vorstehenden Figuren 2A, 2B, 3A und 3B sind einige Beispiele für einheitliche Aufbauten von Gesamt-Anlagenschmata dargestellt.

Verfahren zur Visualisierung von Anlagenschemata mit Hilfe von einzelnen Anlagensegmenten, zur Sicherung der flexiblen Visualisierung verschiedener Anlagesysteme, sowie durch automatisches Verbinden von Versorgungsführungen mit Hilfe von vorgegebenen Verbindungspunkten gemäß vorbestimmten Funktionen und Verbindungseigenschaften dieser Verbindungspunkte und Versorgungsführungen.

Die vorliegende Erfindung umfasst insbesondere folgende Aspekte:
1. Verfahren zur Visualisierung von Anlagenschemata, mit den Schritten:
   Auswählen eines Anlagensegments (201 bis 211, 301 bis 315), wobei das Anlagensegment mit zumindest einer von einer Vielzahl von Abstraktionsebenen (Draw Level 1 bis 4) assoziiert ist,
   Bestimmen (S1-1, S2-1, S3-1, S4-1) der assoziierten Abstraktionsebene des ausgewählten Anlagensegments,
   Einstellen (S1-2, S2-2) der assoziierten Abstraktionsebene von allen zuvor angezeigten Anlagen-segmenten basierend auf der bestimmten Abstraktionsebene des ausgewählten Anlagensegments,
   Voreinstellen (S2-2, S3-2, S3-4) der assoziierten Abstraktionsebene für alle nachfolgend auszuwählenden Anlagensegmente basierend auf der bestimmten Abstraktionsebene des ausgewählten Anlagensegments,
   Setzen (S1-3, S2-3, S3-3, S4-3) eines unmittelbar vorangegangenen Anlagensegments (S3-3, S3-4) oder eines letzten vorangegangenen Anlagensegments, dessen assoziierte Abstraktionsebene mit der bestimmten Abstraktionsebene übereinstimmt (S1-3, S2-3), als letztes Anlagensegment der bestimmten Abstraktionsebene (Be Last Level 1 bis 4), und
   Anzeigen des ausgewählten Anlagensegments auf einer Anzeigeeinrichtung basierend auf der bestimmten Abstraktionsebene, der voreingestellten Abstraktionsebene und dem gesetzten Anlagensegment.
2. Verfahren gemäß Aspekt 1, weiterhin mit dem Schritt:
   Setzen (S1-4, S2-4, S3-4, S4-4) der assoziierten Abstraktionsebene für ein erstes vorangegangenes Anlagensegment, dessen assoziierte Abstraktionsebene mit der bestimmten Abstraktionsebene übereinstimmt, als erstes Anlagensegment der bestimmten Abstraktionsebene (Be First Level 1 bis 4).
3. Verfahren gemäß Aspekt 1, wobei die Vielzahl von Abstraktionsebenen aus vier Systemebenen besteht.
4. Verfahren gemäß Aspekt 3, wobei die erste Systemebene ein Primärsystem, die zweite Systemebene ein Sekundärsystem, die dritte Systemebene ein erstes Rohrleitungssystem und die vierte Systemebene ein zweites Rohrleitungssystem darstellt.
5. Verfahren gemäß Aspekt 4, wobei das Primärsystem ein Fernwärmeheizsystem, das Sekundärsystem ein Wärmeerzeuger, das erste Rohrleitungssystem eine Verbindung zwischen einem Brauchwasserspeicher und einem Solarkollektor und das zweite Rohrleitungssystem eine Verbindung zwischen einem Pufferspeicher und dem Solarkollektor ist.
6. Verfahren gemäß Aspekt 5, wobei der Wärmeerzeuger ein Kessel oder eine Wärmepumpe ist.
7. Verfahren gemäß Aspekt 3, wobei der Einstellschritt, der Voreinstellschritt und der Setzschritt alternativ von einem Empfang eines Signals der zweiten Systemebene oder eines Signals der dritten Systemebene abhängen, wenn im Bestimmungsschritt die erste Systemebene bestimmt wird.
8. Verfahren gemäß Aspekt 7, wobei die Signale der zweiten und dritten Systemebene CTDH-Signale sind.
9. Verfahren gemäß Aspekt 3, wobei der Einstellschritt, der Voreinstellschritt und der Setzschritt zusätzlich von einem Empfang eines Signals der dritten Systemebene abhängen, wenn im Bestimmungsschritt die dritte Systemebene bestimmt wird.
10. Verfahren gemäß Aspekt 3, wobei der Einstellschritt, der Voreinstellschritt und der Setzschritt zusätzlich von einem Empfang eines Signals der vierten Systemebene abhängen, wenn im Bestimmungsschritt die vierte Systemebene bestimmt wird.
11. Verfahren gemäß Aspekt 9 oder 10, wobei das Signal ein CTSP-Signal ist.
12. Verfahren gemäß Aspekt 3, wobei der Voreinstellschritt durchgeführt wird, wenn im Bestimmungsschritt die zweite, dritte oder vierte Systemebene bestimmt wird.
13. Verfahren gemäß Aspekt 3, wobei der Einstellschritt durchgeführt wird, wenn im Bestimmungsschritt die erste oder zweite Systemebene bestimmt wird.
14. Verfahren gemäß Aspekt 3, wobei
   der Setzschritt das letzte vorangegangene Anlagensegment der ersten Systemebene als letztes Anlagensegment der ersten Systemebene setzt, wenn der Bestimmungsschritt die erste Systemebene bestimmt, und
   der Setzschritt das letzte vorangegangene Anlagensegment der zweiten Systemebene als letztes Anlagensegment der zweiten Systemebene setzt, wenn der Bestimmungsschritt die zweite Systemebene bestimmt.
15. Verfahren gemäß Aspekt 3, wobei
   der Setzschritt das unmittelbar vorangegangene Anlagensegment als letztes Anlagensegment der dritten Systemebene setzt, wenn der Bestimmungsschritt die dritte Systemebene bestimmt, und der Setzschritt das unmittelbar vorangegangene Anlagensegment als letztes. Anlagensegment der vierten Systemebene setzt, wenn der Bestimmungsschritt die vierte Systemebene bestimmt.
16. Vorrichtung zur Visualisierung von Anlagenschemata, mit:
   einer Auswahleinrichtung zum Auswählen eines Anlagensegments (201 bis 211, 301 bis 315), wobei das Anlagensegment mit zumindest einer von einer Vielzahl von Abstraktionsebenen (Draw Level 1 bis 4) assoziiert ist,
   einer Bestimmungseinrichtung zum Bestimmen der assoziierten Abstraktionsebene des ausgewählten Anlagensegments,
   einer Einstelleinrichtung zum Einstellen der assoziierten Abstraktionsebene von allen zuvor angezeigten Anlagensegmenten basierend auf der bestimmten Abstraktionsebene des ausgewählten Anlagensegments,
   einer Voreintelleinrichtung zum Voreinstellen der assoziierten Abstraktionsebene für alle nachfolgend auszuwählenden Anlagensegmente basierend auf der bestimmten Abstraktionsebene des angezeigten Anlagensegments,
   einer Setzeinrichtung zum Setzen eines unmittelbar vorangegangenen Anlagensegments oder eines letzten vorangegangenen Anlagensegments, dessen assoziierte Abstraktionsebene mit der bestimmten Abstraktionsebene übereinstimmt, als letztes Anlagensegment der bestimmten Abstraktionsebene (Be Last Level 1 bis 4), und
   einer Anzeigeeinrichtung zum Anzeigen des ausgewählten Anlagensegments basierend auf der bestimmten Abstraktionsebene, der voreingestellten Abstraktionsebene und dem gesetzten Anlagensegment.
17. Vorrichtung gemäß Aspekt 16, wobei die Setzeinrichtung weiterhin zu einem Setzen der assoziierten Abstraktionsebene für ein erstes vorangegangenes Anlagensegment, dessen assoziierte Abstraktionsebene mit der bestimmten Abstraktionsebene übereinstimmt, als erstes Anlagensegment der bestimmten Abstraktionsebene (Be First Level 1 bis 4) eingerichtet ist.
18. Vorrichtung gemäß Aspekt 16, wobei die Vielzahl von Abstraktionsebenen aus vier Systemebenen besteht.
19. Vorrichtung gemäß Aspekt 18, wobei die erste Systemebene ein Primärsystem, die zweite Systemebene ein Sekundärsystem, die dritte Systemebene ein erstes Rohrleitungssystem und die vierte Systemebene ein zweites Rohrleitungssystem darstellt.
20. Vorrichtung gemäß Aspekt 19, wobei das Primärsystem ein Fernwärmeheizsystem, das Sekundärsystem ein Wärmeerzeuger, das erste Rohrleitungssystem eine Verbindung zwischen einem Brauchwasserspeicher und einem Solarkollektor und das zweite Rohrleitungssystem eine Verbindung zwischen einem Pufferspeicher und dem Solarkollektor ist.
21. Vorrichtung gemäß Aspekt 20, wobei der Wärmeerzeuger ein Kessel oder eine Wärmepumpe ist.
22. Vorrichtung gemäß Aspekt 18, wobei die Einstelleinrichtung, die Voreinstelleinrichtung und die Setzeinrichtung zu einem Einstellen, Voreinstellen und Setzen eingerichtet sind, die alternativ von einem Empfang eines Signals der zweiten Systemebene oder eines Signals der dritten Systemebene abhängen, wenn durch die Bestimmungseinrichtung die erste Systemebene bestimmt wird.
23. Vorrichtung gemäß Aspekt 22, wobei die Signale der zweiten und dritten Systemebene CTDH-Signale sind.
24. Vorrichtung gemäß Aspekt 18, wobei die Einstelleinrichtung, die Voreinstelleinrichtung und die Setzeinrichtung zu einem Einstellen, Voreinstellen und Setzen eingerichtet sind, die zusätzlich von einem Empfang eines Signals der dritten Systemebene abhängen, wenn durch die Bestimmungseinrichtung die dritte Systemebene bestimmt wird.
25. Vorrichtung gemäß Aspekt 18, wobei die Einstelleinrichtung, die Voreinstelleinrichtung und die Setzeinrichtung zu einem Einstellen, Voreinstellen und Setzen eingerichtet sind, die zusätzlich von einem Empfang eines Signals der vierten Systemebene abhängen, wenn durch die Bestimmungseinrichtung die vierte Systemebene bestimmt wird.
26. Vorrichtung gemäß Aspekt 24 oder 25, wobei das Signal ein CTSP-Signal ist.
27. Vorrichtung gemäß Aspekt 18, wobei die Voreinstelleinrichtung zu einem Durchführen des Voreinstellens eingerichtet ist, wenn durch die Bestimmungseinrichtung die zweite, dritte oder vierte Systemebene bestimmt wird.
28. Vorrichtung gemäß Aspekt 18, wobei die Einstelleinrichtung zu einem Durchführen des Einstellens eingerichtet ist, wenn durch die Bestimmungseinrichtung die erste oder zweite Systemebene bestimmt wird.
29. Vorrichtung gemäß Aspekt 18, wobei die Setzeinrichtung eingerichtet ist, um
   das letzte vorangegangene Anlagensegment der ersten Systemebene als letztes Anlagensegment der ersten Systemebene zu setzen, wenn durch die Bestimmungseinrichtung die erste Systemebene bestimmt wird, und um
   das letzte vorangegangene Anlagensegment der zweiten Systemebene als letztes Anlagensegment der zweiten Systemebene zu setzen, wenn durch die Bestimmungseinrichtung die zweite Systemebene bestimmt wird.
30. Vorrichtung gemäß Aspekt 18, wobei die Setzeinrichtung eingerichtet ist, um
   das unmittelbar vorangegangene Anlagensegment als letztes Anlagensegment der dritten Systemebene zu setzen, wenn durch die Bestimmungseinrichtung die dritte Systemebene bestimmt wird, und um
   das unmittelbar vorangegangene Anlagensegment als letztes Anlagensegment der vierten Systemebene zu setzen, wenn durch die Bestimmungseinrichtung die vierte Systemebene bestimmt wird.
31. Computerprogrammprodukt, das prozessorimplementierbare Anweisungen zur Durchführung eines Verfahrens gemäß einem der Aspekte 1 bis 15 enthält.

## Patentansprüche

1. Verfahren zur Visualisierung von Anlagenschemata, mit den Schritten:
Auswählen eines Anlagensegments (201 bis 211, 301 bis 315), wobei das Anlagensegment mit zumindest einer von einer Vielzahl von Abstraktionsebenen (Draw Level 1 bis 4) assoziiert ist,
Bestimmen (S1-1, S2-1, S3-1, S4-1) der assoziierten Abstraktionsebene des ausgewählten Anlagensegments,
Einstellen (S1-2, S2-2) der assoziierten Abstraktionsebene von allen zuvor angezeigten Anlagensegmenten basierend auf der bestimmten Abstraktionsebene des ausgewählten Anlagensegments,
Voreinstellen (S2-2, S3-2, S3-4) der assoziierten Abstraktionsebene für alle nachfolgend auszuwählenden Anlagensegmente basierend auf der bestimmten Abstraktionsebene des ausgewählten Anlagensegments,
Setzen (S1-3, S2-3, S3-3, S4-3) eines unmittelbar vorangegangenen Anlagensegments (S3-3, S3-4) oder eines letzten vorangegangenen Anlagensegments, dessen assoziierte Abstraktionsebene mit der bestimmten Abstraktionsebene übereinstimmt (S1-3, S2-3), als letztes Anlagensegment der bestimmten Abstraktionsebene (Be Last Level 1 bis 4), und
Anzeigen des ausgewählten Anlagensegments auf einer Anzeigeeinrichtung basierend auf der bestimmten Abstraktionsebene, der voreingestellten Abstraktionsebene und dem gesetzten Anlagensegment.

2. Verfahren gemäß Anspruch 1, weiterhin mit dem Schritt:
Setzen (S1-4, S2-4, S3-4, S4-4) der assoziierten Abstraktionsebene für ein erstes vorangegangenes Anlagensegment, dessen assoziierte Abstraktionsebene mit der bestimmten Abstraktionsebene übereinstimmt, als erstes Anlagensegment der bestimmten Abstraktionsebene (Be First Level 1 bis 4).

3. Verfahren gemäß Anspruch 1, wobei die Vielzahl von Abstraktionsebenen aus vier Systemebenen besteht.

4. Verfahren gemäß Anspruch 3, wobei
i) die erste Systemebene ein Primärsystem, die zweite Systemebene ein Sekundärsystem, die dritte Systemebene ein erstes Rohrleitungssystem und die vierte Systemebene ein zweites Rohrleitungssystem darstellt,
und optional, falls i) erfüllt ist,
ii) das Primärsystem ein Fernwärmeheizsystem, das Sekundärsystem ein Wärmeerzeuger, das erste Rohrleitungssystem eine Verbindung zwischen einem Brauchwasserspeicher und einem Solarkollektor und das zweite Rohrleitungssystem eine Verbindung zwischen einem Pufferspeicher und dem Solarkollektor ist,
und optional, falls i) und ii) erfüllt sind,
iii) der Wärmeerzeuger ein Kessel oder eine Wärmepumpe ist.

5. Verfahren gemäß Anspruch 3, wobei der Einstellschritt, der Voreinstellschritt und der Setzschritt alternativ von einem Empfang eines Signals der zweiten Systemebene oder eines Signals der dritten Systemebene abhängen, wenn im Bestimmungsschritt die erste Systemebene bestimmt wird.

6. Verfahren gemäß Anspruch 5, wobei die Signale der zweiten und dritten Systemebene CTDH-Signale sind.

7. Verfahren gemäß Anspruch 3, wobei
der Einstellschritt, der Voreinstellschritt und der Setzschritt zusätzlich von einem Empfang eines Signals der dritten Systemebene abhängen, wenn im Bestimmungsschritt die dritte Systemebene bestimmt wird, und/oder
der Einstellschritt, der Voreinstellschritt und der Setzschritt zusätzlich von einem Empfang eines Signals der vierten Systemebene abhängen, wenn im Bestimmungsschritt die vierte Systemebene bestimmt wird.

8. Verfahren gemäß Anspruch 7, wobei das Signal ein CTSP-Signal ist.

9. Verfahren gemäß Anspruch 3, wobei
der Voreinstellschritt durchgeführt wird, wenn im Bestimmungsschritt die zweite, dritte oder vierte Systemebene bestimmt wird, und/oder
der Einstellschritt durchgeführt wird, wenn im Bestimmungsschritt die erste oder zweite Systemebene bestimmt wird, und/oder
der Setzschritt das letzte vorangegangene Anlagensegment der ersten Systemebene als letztes Anlagensegment der ersten Systemebene setzt, wenn der Bestimmungsschritt die erste Systemebene bestimmt, und
der Setzschritt das letzte vorangegangene Anlagensegment der zweiten Systemebene als letztes Anlagensegment der zweiten Systemebene setzt, wenn der Bestimmungsschritt die zweite Systemebene bestimmt, und/oder
der Setzschritt das unmittelbar vorangegangene Anlagensegment als letztes Anlagensegment der dritten Systemebene setzt, wenn der Bestimmungsschritt die dritte Systemebene bestimmt, und
der Setzschritt das unmittelbar vorangegangene Anlagensegment als letztes Anlagensegment der vierten Systemebene setzt, wenn der Bestimmungsschritt die vierte Systemebene bestimmt.

10. Vorrichtung zur Visualisierung von Anlagenschemata, mit:
einer Auswahleinrichtung zum Auswählen eines Anlagensegments (201 bis 211, 301 bis 315), wobei das Anlagensegment mit zumindest einer von einer Vielzahl von Abstraktionsebenen (Draw Level 1 bis 4) assoziiert ist,
einer Bestimmungseinrichtung zum Bestimmen der assoziierten Abstraktionsebene des ausgewählten Anlagensegments,
einer Einstelleinrichtung zum Einstellen der assoziierten Abstraktionsebene von allen zuvor angezeigten Anlagensegmenten basierend auf der bestimmten Abstraktionsebene des ausgewählten Anlagensegments,
einer Voreintelleinrichtung zum Voreinstellen der assoziierten Abstraktionsebene für alle nachfolgend auszuwählenden Anlagensegmente basierend auf der bestimmten Abstraktionsebene des angezeigten Anlagensegments,
einer Setzeinrichtung zum Setzen eines unmittelbar vorangegangenen Anlagensegments oder eines letzten vorangegangenen Anlagensegments, dessen assoziierte Abstraktionsebene mit der bestimmten Abstraktionsebene übereinstimmt, als letztes Anlagensegment der bestimmten Abstraktionsebene (Be Last Level 1 bis 4), und
einer Anzeigeeinrichtung zum Anzeigen des ausgewählten Anlagensegments basierend auf der bestimmten Abstraktionsebene, der voreingestellten Abstraktionsebene und dem gesetzten Anlagensegment.

11. Vorrichtung gemäß Anspruch 10, wobei die Setzeinrichtung weiterhin zu einem Setzen der assoziierten Abstraktionsebene für ein erstes vorangegangenes Anlagensegment, dessen assoziierte Abstraktionsebene mit der bestimmten Abstraktionsebene übereinstimmt, als erstes Anlagensegment der bestimmten Abstraktionsebene (Be First Level 1 bis 4) eingerichtet ist.

12. Vorrichtung gemäß Anspruch 10, wobei die Vielzahl von Abstraktionsebenen aus vier Systemebenen besteht.

13. Vorrichtung gemäß Anspruch 12, wobei
i) die erste Systemebene ein Primärsystem, die zweite Systemebene ein Sekundärsystem, die dritte Systemebene ein erstes Rohrleitungssystem und die vierte Systemebene ein zweites Rohrleitungssystem darstellt,
und optional, falls i) erfüllt ist,
ii) das Primärsystem ein Fernwärmeheizsystem, das Sekundärsystem ein Wärmeerzeuger, das erste Rohrleitungssystem eine Verbindung zwischen einem Brauchwasserspeicher und einem Solarkollektor und das zweite Rohrleitungssystem eine Verbindung zwischen einem Pufferspeicher und dem Solarkollektor ist,
und optional, falls i) und ii) erfüllt sind,
iii) der Wärmeerzeuger ein Kessel oder eine Wärmepumpe ist.

14. Vorrichtung gemäß Anspruch 12, wobei die Einstelleinrichtung, die Voreinstelleinrichtung und die Setzeinrichtung zu einem Einstellen, Voreinstellen und Setzen eingerichtet sind, die alternativ von einem Empfang eines Signals der zweiten Systemebene oder eines Signals der dritten Systemebene abhängen, wenn durch die Bestimmungseinrichtung die erste Systemebene bestimmt wird.

15. Vorrichtung gemäß Anspruch 14, wobei die Signale der zweiten und dritten Systemebene CTDH-Signale sind.

16. Vorrichtung gemäß Anspruch 12, wobei
die Einstelleinrichtung, die Voreinstelleinrichtung und die Setzeinrichtung zu einem Einstellen, Voreinstellen und Setzen eingerichtet sind, die zusätzlich von einem Empfang eines Signals der dritten Systemebene abhängen, wenn durch die Bestimmungseinrichtung die dritte Systemebene bestimmt wird, und/oder
die Einstelleinrichtung, die Voreinstelleinrichtung und die Setzeinrichtung zu einem Einstellen, Voreinstellen und Setzen eingerichtet sind, die zusätzlich von einem Empfang eines Signals der vierten Systemebene abhängen, wenn durch die Bestimmungseinrichtung die vierte Systemebene bestimmt wird.

17. Vorrichtung gemäß Anspruch 16, wobei das Signal ein CTSP-Signal ist.

18. Vorrichtung gemäß Anspruch 12, wobei
die Voreinstelleinrichtung zu einem Durchführen des Voreinstellens eingerichtet ist, wenn durch die Bestimmungseinrichtung die zweite, dritte oder vierte Systemebene bestimmt wird, und/oder
die Einstelleinrichtung zu einem Durchführen des Einstellens eingerichtet ist, wenn durch die Bestimmungseinrichtung die erste oder zweite Systemebene bestimmt wird, und/oder
die Setzeinrichtung eingerichtet ist, um
das letzte vorangegangene Anlagensegment der ersten Systemebene als letztes Anlagensegment der ersten Systemebene zu setzen, wenn durch die Bestimmungseinrichtung die erste Systemebene bestimmt wird, und um
das letzte vorangegangene Anlagensegment der zweiten Systemebene als letztes Anlagensegment der zweiten Systemebene zu setzen, wenn durch die Bestimmungseinrichtung die zweite Systemebene bestimmt wird, und/oder
die Setzeinrichtung eingerichtet ist, um
das unmittelbar vorangegangene Anlagensegment als letztes Anlagensegment der dritten Systemebene zu setzen, wenn durch die Bestimmungseinrichtung die dritte Systemebene bestimmt wird, und um
das unmittelbar vorangegangene Anlagensegment als letztes Anlagensegment der vierten Systemebene zu setzen, wenn durch die Bestimmungseinrichtung die vierte Systemebene bestimmt wird.

19. Computerprogrammprodukt, das prozessorimplementierbare Anweisungen zur Durchführung eines Verfahrens gemäß einem der Ansprüche 1 bis 9 enthält.

## Claims

1. Method for visualizing plant schematics, having the steps of:
selecting a plant segment (201 to 211, 301 to 315), the plant segment being associated with at least one of a multiplicity of abstraction levels (Draw Level 1 to 4),
determining (S1-1, S2-1, S3-1, S4-1) the associated abstraction level of the selected plant segment,
adjusting (S1-2, S2-2) the associated abstract level of all previously displayed plant segments on the basis of the abstraction level determined for the selected plant segment,
pre-adjusting (S2-2, S3-2, S3-4) the associated abstract level for all plant segments subsequently to be selected, on the basis of the abstraction level determined for the selected plant segment,
setting (S1-3, S2-3, S3-3, S4-3) an immediately preceding plant segment (S3-3, S3-4) or a last preceding plant segment, the associated abstraction level of which coincides with the abstraction level (S1-3, S2-3) which has been determined, as the last plant segment of the abstraction level which has been determined (Be Last Level 1 to 4), and
displaying the selected plant segment on a display instrument on the basis of the abstraction level which has been determined, the pre-adjusted abstraction level and the set plant segment.

2. Method according to Claim 1, furthermore having the step of:
setting (S1-4, S2-4, S3-4, S4-4) the associated abstraction level for a first preceding plant segment, the associated abstraction level of which coincides with the abstraction level which has been determined, as the first plant segment of the abstraction level which has been determined (Be First Level 1 to 4).

3. Method according to Claim 1, wherein the multiplicity of abstraction levels consist of four system levels.

4. Method according to Claim 3, wherein
i) the first system level represents a primary system, the second system level a secondary system, the third system level a first pipeline system and the fourth system level a second pipeline system,
and optionally, if i) is fulfilled,
ii) the primary system is a remote heating system, the secondary system is a heat generator, the first pipeline system is a connection between a service water tank and a solar collector, and the second pipeline system is a connection between a buffer tank and the solar collector,
and optionally, if i) and ii) are fulfilled,
iii) the heat generator is a boiler or a heat pump.

5. Method according to Claim 3, wherein the adjustment step, the pre-adjustment step and the setting step depend alternatively on reception of a signal of the second system level or a signal of the third system level, when the first system level is determined in the determination step.

6. Method according to Claim 5, wherein the signals of the second and third system levels are CTDH signals.

7. Method according to Claim 3, wherein
the adjustment step, the pre-adjustment step and the setting step depend additionally on reception of a signal of the third system level, when the third system level is determined in the determination step, and/or
the adjustment step, the pre-adjustment step and the setting step depend additionally on reception of a signal of the fourth system level, when the fourth system level is determined in the determination step.

8. Method according to Claim 7, wherein the signal is a CTSP signal.

9. Method according to Claim 3, wherein
the pre-adjustment step is carried out when the second, third or fourth system level is determined in the determination step, and/or
the adjustment step is carried out when the first or second system level is determined in the determination step, and/or
the setting step sets the last preceding plant segment of the first system level as the last plant segment of the first system level when the determination step determines the first system level, and
the setting step sets the last preceding plant segment of the second system level as the last plant segment of the second system level when the determination step determines the second system level, and/or
the setting step sets the immediately preceding plant segment as the last plant segment of the third system level when the determination step determines the third system level, and
the setting step sets the immediately preceding plant segment as the last plant segment of the fourth system level when the determination step determines the fourth system level.

10. Device for visualizing plant schematics, having:
a selection instrument for selecting a plant segment (201 to 211, 301 to 315), the plant segment being associated with at least one of a multiplicity of abstraction levels (Draw Level 1 to 4),
a determination instrument for determining the associated abstraction level of the selected plant segment,
an adjustment instrument for adjusting the associated abstract level of all previously displayed plant segments on the basis of the abstraction level determined for the selected plant segment,
a pre-adjustment instrument for pre-adjusting the associated abstract level for all plant segments subsequently to be selected, on the basis of the abstraction level determined for the selected plant segment,
a setting instrument for setting an immediately preceding plant segment or a last preceding plant segment, the associated abstraction level of which coincides with the abstraction level which has been determined, as the last plant segment of the abstraction level which has been determined (Be Last Level 1 to 4), and
a display instrument for displaying the selected plant segment on a display instrument on the basis of the abstraction level which has been determined, the pre-adjusted abstraction level and the set plant segment.

11. Device according to Claim 10, wherein the setting instrument is furthermore adapted for setting the associated abstraction level for a first preceding plant segment, the associated abstraction level of which coincides with the abstraction level which has been determined, as the first plant segment of the abstract level which has been determined (Be First Level 1 to 4).

12. Device according to Claim 10, wherein the multiplicity of abstraction levels consist of four system levels.

13. Device according to Claim 12, wherein
i) the first system level represents a primary system, the second system level a secondary system, the third system level a first pipeline system and the fourth system level a second pipeline system,
and optionally, if i) is fulfilled,
ii) the primary system is a remote heating system, the secondary system is a heat generator, the first pipeline system is a connection between a service water tank and a solar collector, and the second pipeline system is a connection between a buffer tank and the solar collector, and optionally, if i) and ii) are fulfilled,
iii) the heat generator is a boiler or a heat pump.

14. Device according to Claim 12, wherein the adjustment instrument, the pre-adjustment instrument and the setting instrument are adapted for adjustment, pre-adjustment and setting which depend alternatively on reception of a signal of the second system level or a signal of the third system level, when the first system level is determined by the determination instrument.

15. Device according to Claim 14, wherein the signals of the second and third system levels are CTDH signals.

16. Device according to Claim 12, wherein the adjustment instrument, the pre-adjustment instrument and the setting instrument are adapted for adjustment, pre-adjustment and setting which depend additionally on reception of a signal of the third system level, when the third system level is determined by the determination instrument, and/or
the adjustment instrument, the pre-adjustment instrument and the setting instrument are adapted for adjustment, pre-adjustment and setting which depend additionally on reception of a signal of the fourth system level, when the fourth system level is determined by the determination instrument.

17. Device according to Claim 16, wherein the signal is a CTSP signal.

18. Device according to Claim 12, wherein
the pre-adjustment device is adapted for carrying out the pre-adjustment when the second, third or fourth system level is determined by the determination instrument, and/or
the adjustment instrument is adapted for carrying out the adjustment when the first or second system level is determined by the determination instrument, and/or
the setting instrument is adapted for
setting the last preceding plant segment of the first system level as the last plant segment of the first system level when the first system level is determined by the determination instrument, and for
setting the last preceding plant segment of the second system level as the last plant segment of the second system level when the second system level is determined by the determination instrument, and/or
the setting instrument is adapted for
setting the immediately preceding plant segment as the last plant segment of the third system level when the third system level is determined by the determination instrument, and for
setting the immediately preceding plant segment as the last plant segment of the fourth system level when the fourth system level is determined by the determination instrument.

19. Computer program product, which contains processor-implementable instructions for carrying out a method according to one of Claims 1 to 9.

## Revendications

1. Procédé de visualisation de schémas d'installations, comprenant les étapes suivantes :
Sélection d'un segment d'installation (201 à 211, 301 à 315), le segment d'installation étant associé à au moins l'un d'une pluralité de plans d'abstraction (niveau de dessin 1 à 4),
Détermination (S1-1, S2-1, S3-1, S4-1) du plan d'abstraction associé du segment d'installation sélectionné,
Réglage (S1-2, S2-2) du plan d'abstraction associé de tous les segments d'installation affichés précédemment en se basant sur le plan d'abstraction déterminé du segment d'installation sélectionné,
Préréglage (S2-2, S3-2, S3-4) du plan d'abstraction associé pour tous les segments d'installation suivants à sélectionner en se basant sur le plan d'abstraction déterminé du segment d'installation sélectionné,
Déclaration (S1-3, S2-3, S3-3, S4-3) d'un segment d'installation immédiatement précédent (S3-3, S3-4) ou d'un dernier segment d'installation précédent, dont le plan d'abstraction associé coïncide avec le plan d'abstraction déterminé (S1-3, S2-3), en tant que dernier segment d'installation du plan d'abstraction déterminé (soit le dernier niveau 1 à 4), et
Affichage du segment d'installation sélectionné sur un dispositif d'affichage en se basant sur le plan d'abstraction déterminé, le plan d'abstraction préréglé et le segment d'installation déclaré.

2. Procédé selon la revendication 1, comprenant en plus les étapes suivantes :
Déclaration (S1-4, S2-4, S3-4, S4-4) du plan d'abstraction associé pour un premier segment d'installation précédent, dont le plan d'abstraction associé coïncide avec le plan d'abstraction déterminé, en tant que premier segment d'installation du plan d'abstraction déterminé (soit le premier niveau 1 à 4).

3. Procédé selon la revendication 1, selon lequel la pluralité de plans d'abstraction se compose de quatre plans de système.

4. Procédé selon la revendication 3, selon lequel
i) le premier plan de système représente un système primaire, le deuxième plan de système un système secondaire, le troisième plan de système un premier réseau de conduites et le quatrième plan de système un deuxième réseau de conduites,
et, en option, si i) est vérifié,
ii) le système primaire est un système de chauffage à distance, le système secondaire un générateur de chaleur, le premier réseau de conduites une liaison entre un accumulateur d'eau sanitaire et un collecteur solaire et le deuxième réseau de conduites une liaison entre un accumulateur tampon et le collecteur solaire,
et, en option, si i) et ii) sont vérifiés,
iii) le générateur de chaleur est une chaudière ou une pompe à chaleur.

5. Procédé selon la revendication 3, selon lequel l'étape de réglage, l'étape de préréglage et l'étape de déclaration dépendent en variante de la réception d'un signal du deuxième plan de système ou d'un signal du troisième plan de système lorsque le premier plan de système est déterminé dans l'étape de détermination.

6. Procédé selon la revendication 5, selon lequel les signaux du deuxième et du troisième plan de système sont des signaux CTDH.

7. Procédé selon la revendication 3, selon lequel
l'étape de réglage, l'étape de préréglage et l'étape de déclaration dépendent en plus de la réception d'un signal du troisième plan de système lorsque le troisième plan de système est déterminé dans l'étape de détermination et/ou
l'étape de réglage, l'étape de préréglage et l'étape de déclaration dépendent en plus de la réception d'un signal du quatrième plan de système lorsque le quatrième plan de système est déterminé dans l'étape de détermination.

8. Procédé selon la revendication 7, selon lequel le signal est un signal CTSP.

9. Procédé selon la revendication 3, selon lequel
l'étape de préréglage est effectuée lorsque le deuxième, le troisième ou le quatrième plan de système est déterminé dans l'étape de détermination, et/ou
l'étape de réglage est effectuée lorsque le premier ou le deuxième plan de système est déterminé dans l'étape de détermination, et/ou
l'étape de déclaration déclare le dernier segment d'installation précédent du premier plan de système en tant que dernier segment d'installation du premier plan de système lorsque l'étape de détermination détermine le premier plan de système et
l'étape de déclaration déclare le dernier segment d'installation précédent du deuxième plan de système en tant que dernier segment d'installation du deuxième plan de système lorsque l'étape de détermination détermine le deuxième plan de système, et/ou
l'étape de déclaration déclare le segment d'installation immédiatement précédent en tant que dernier segment d'installation du troisième plan de système lorsque l'étape de détermination détermine le troisième plan de système et
l'étape de déclaration déclare le segment d'installation immédiatement précédent en tant que dernier segment d'installation du quatrième plan de système lorsque l'étape de détermination détermine le quatrième plan de système.

10. Dispositif de visualisation de schémas d'installations comprenant :
un dispositif de sélection pour sélectionner un segment d'installation (201 à 211, 301 à 315), le segment d'installation étant associé à au moins l'un d'une pluralité de plans d'abstraction (niveau de dessin 1 à 4),
un dispositif de détermination pour déterminer le plan d'abstraction associé du segment d'installation sélectionné,
un dispositif de réglage pour régler le plan d'abstraction associé de tous les segments d'installation affichés précédemment en se basant sur le plan d'abstraction déterminé du segment d'installation sélectionné,
un dispositif de préréglage pour prérégler le plan d'abstraction associé pour tous les segments d'installation suivants à sélectionner en se basant sur le plan d'abstraction déterminé du segment d'installation affiché,
un dispositif de déclaration pour déclarer un segment d'installation immédiatement précédent ou un dernier segment d'installation précédent, dont le plan d'abstraction associé coïncide avec le plan d'abstraction déterminé, en tant que dernier segment d'installation du plan d'abstraction déterminé (soit le dernier niveau 1 à 4), et
un dispositif d'affichage pour afficher le segment d'installation sélectionné en se basant sur le plan d'abstraction déterminé, le plan d'abstraction préréglé et le segment d'installation déclaré.

11. Dispositif selon la revendication 10, dans lequel le dispositif de déclaration est en plus configuré pour déclarer le plan d'abstraction associé pour un premier segment d'installation précédent, dont le plan d'abstraction associé coïncide avec le plan d'abstraction déterminé, en tant que premier segment d'installation du plan d'abstraction déterminé (soit le premier niveau 1 à 4).

12. Dispositif selon la revendication 10, dans lequel la pluralité de plans d'abstraction se compose de quatre plans de système.

13. Dispositif selon la revendication 12, dans lequel
le premier plan de système représente un système primaire, le deuxième plan de système un système secondaire, le troisième plan de système un premier réseau de conduites et le quatrième plan de système un deuxième réseau de conduites,
et, en option, si i) est vérifié,
ii) le système primaire est un système de chauffage à distance, le système secondaire un générateur de chaleur, le premier réseau de conduites une liaison entre un accumulateur d'eau sanitaire et un collecteur solaire et le deuxième réseau de conduites une liaison entre un accumulateur tampon et le collecteur solaire,
et, en option, si i) et ii) sont vérifiés,
iii) le générateur de chaleur est une chaudière ou une pompe à chaleur.

14. Dispositif selon la revendication 12, dans lequel le dispositif de réglage, le dispositif de préréglage et le dispositif de déclaration sont configurés pour un réglage, un préréglage et une déclaration qui dépendent en variante de la réception d'un signal du deuxième plan de système ou d'un signal du troisième plan de système lorsque le premier plan de système est déterminé par le dispositif de détermination.

15. Dispositif selon la revendication 14, dans lequel les signaux du deuxième et du troisième plan de système sont des signaux CTDH.

16. Dispositif selon la revendication 12, dans lequel
le dispositif de réglage, le dispositif de préréglage et le dispositif de déclaration sont configurés pour un réglage, un préréglage et une déclaration qui dépendent en plus de la réception d'un signal du troisième plan de système lorsque le troisième plan de système est déterminé par le dispositif de détermination, et/ou
le dispositif de réglage, le dispositif de préréglage et le dispositif de déclaration sont configurés pour un réglage, un préréglage et une déclaration qui dépendent en plus de la réception d'un signal du quatrième plan de système lorsque le quatrième plan de système est déterminé par le dispositif de détermination.

17. Dispositif selon la revendication 16, dans lequel le signal est un signal CTSP.

18. Dispositif selon la revendication 12, dans lequel
le dispositif de préréglage est configuré pour effectuer un préréglage lorsque le deuxième, le troisième ou le quatrième plan de système est déterminé par le dispositif de détermination, et/ou
le dispositif de réglage est configuré pour effectuer un réglage lorsque le premier ou le deuxième plan de système est déterminé par le dispositif de détermination, et/ou
le dispositif de déclaration est configuré pour déclarer le dernier segment d'installation précédent du premier plan de système en tant que dernier segment d'installation du premier plan de système lorsque le dispositif de détermination détermine le premier plan de système et pour
déclarer le dernier segment d'installation précédent du deuxième plan de système en tant que dernier segment d'installation du deuxième plan de système lorsque le dispositif de détermination détermine le deuxième plan de système, et/ou
le dispositif de déclaration est configuré pour déclarer le segment d'installation immédiatement précédent en tant que dernier segment d'installation du troisième plan de système lorsque le dispositif de détermination détermine le troisième plan de système et pour
déclarer le segment d'installation immédiatement précédent en tant que dernier segment d'installation du quatrième plan de système lorsque le dispositif de détermination détermine le quatrième plan de système.

19. Programme informatique qui contient des instructions pouvant être exécutées par un processeur pour mettre en oeuvre un procédé selon l'une des revendications 1 à 9.
